# EUROPÄISCHE PATENTANMELDUNG

(11) **EP 1 039 723 A2**
(43) Veröffentlichungstag der Anmeldung: **27.09.2000**
(21) Anmeldenummer: 99123384.2
(22) Anmeldetag: 24.11.1999
(51) Int. Cl.: H04L 29/06

(54) **Verfahren zur Übertragung von Multimedia Bitströmen**

(30) Priorität: 12.01.1999 DE 19900741
(71) Anmelder: ROBERT BOSCH GMBH, 70442 Stuttgart (DE)
(72) Erfinder: Nitsche, Gunnar, 31139 Hildesheim (DE)

(57) **Zusammenfassung**

Die Erfindung betrifft ein Verfahren zur Übertragung von bei Multimedia-Anwendungen auftretenden kontinuierlichen und unregelmäßigen Bitströmen über ein Netzwerk, das mindestens einen Übertragungskanal mit konstanter Bitrate und mindestens einen paketorientierten Übertragungskanal umfaßt.

Zur optimalen Ausnutzung der Übertragungskanäle des Netzwerks wird vorgeschlagen, eine zwischen Multimedia-Anwendung und Netzwerk geschaltete Anpassungseinheit vorzusehen. Erfindungsgemäß wird vor der Übertragung eines Bitstromes jeweils dessen Typ spezifiziert, nämlich ob es sich um einen kontinuierlichen oder einen unregelmäßigen Bitstrom handelt, so daß die Anpassungseinheit dementsprechend entweder einen Übertragungskanal mit kontinuierlicher Bitrate oder einen paketorientierten Übertragungskanal für die Übertragung zur Verfügung stellen kann.

## Beschreibung

### Stand der Technik

Die Erfindung betrifft ein Verfahren zur Übertragung von bei Multimedia-Anwendungen auftretenden kontinuierlichen und unregelmäßigen Bitströmen über ein Netzwerk mit mindestens einem Übertragungskanal mit konstanter Bitrate (Streammode-Kanal) und mindestens einem paketorientierten Übertragungskanal (Packetmode-Kanal).

Unter dem Oberbegriff "Multimedia-Anwendung" wird heute eine Vielzahl von ganz unterschiedlichen Anwendungen zusammengefaßt, bei denen entweder ein unregelmäßiger Datenfluß oder ein kontinuierlicher Datenfluß stattfindet. Datenbankabfragen, wie z. B. WWW im Internet, sind typische Multimedia-Anwendungen, die mit einem unregelmäßigen Datenfluß verbunden sind. Als Beispiel für eine Echtzeitanwendung, also eine Anwendung, die mit einem kontinuierlichen Datenfluß verbunden ist, sei hier MPEG-2 codiertes digitales Fernsehen genannt.

Zur Übertragung eines unregelmäßigen Datenflusses bzw. von unregelmäßigen Bitströmen sind Netze mit paketorientierten Übertragungskanälen, wie z. B. Internet, besonders geeignet. So werden beispielsweise im Mobilfunkbereich bevorzugt paketorientierte Dienste eingesetzt, die möglichst nur dann einen Übertragungskanal zur Verfügung stellen, wenn auch tatsächlich ein Datentransfer stattfinden soll. Auf diese Weise lassen sich die Kosten für offene Übertragungskanäle, die zeitweilig gar nicht benutzt werden, minimieren.

Ein typisches für Echtzeitanwendungen ausgelegtes und leitungsvermitteltes Netz ist ISDN, dessen Übertragungskanäle eine konstante Bitrate aufweisen. Die nachfolgend im einzelnen aufgeführten in der Praxis verwendeten Netzwerke umfassen sowohl paketorientierte Übertragungskanäle als auch Übertragungskanäle mit konstanter Bitrate.

ATM (Asynchronous Transfer Mode) ist im Kern paketorientiert, bietet aber auch die Möglichkeit, Übertragungskanäle mit konstanter Bitrate zu reservieren. Insbesondere können gleichzeitig sowohl paketorientierte Übertragungskanäle als auch Übertragungskanäle mit konstanter Bitrate zur Verfügung gestellt werden.

Auch Internet ist im Kern paketorientiert, soll aber so weiterentwickelt werden, daß auch Übertragungskanäle mit konstanter Bitrate reserviert werden können.

DAB (Digital Audio Broadcast) ist im Kern ein synchrones Netz, das Übertragungskanäle mit konstanter Bitrate zur Verfügung stellt. Auf diesen Übertragungskanälen können aber auch paketorientierte Dienste übermittelt werden.

GSM (Global System for Mobile communications) ist im Kern ebenfalls ein synchrones Netz, das derzeit Übertragungskanäle mit einer maximalen Bitrate von 9,6 kbit/s zur Verfügung stellt. Die bereits spezifizierte Weiterentwicklung HSCSD (High Speed Circuit Switched Data) bietet konstante Bitraten von n*9,6 kbit/s mit n = 1,2,...,8, während die noch in Entwicklung befindliche Ergänzung GPRS (General Packet Radio Service) paketorientiert sein wird.

Bislang werden die bei Multimedia-Anwendungen auftretenden Bitströme immer entweder vollständig über einen Streammode-Kanal oder vollständig über einen Packetmode-Kanal des jeweils verwendeten Netzwerks übertragen. Bei komplexen Anwendungen kann dies dazu führen, daß unregelmäßige Bitströme über einen Streammode-Kanal übertragen werden, so daß dieser nur teilweise ausgenutzt werden kann. Dies verursacht in der Regel unnötig hohe Verbindungskosten. Die Übertragung von Bitströmen mit konstanter Bitrate über einen Packetmode-Kanal führt in der Regel zu Übertragungsverzögerungen und/oder einer verminderten Übertragungsqualität bedingt durch mögliche Paketverluste.

Mit der vorliegenden Erfindung soll nun eine Netzwerkanpassung zur Verfügung gestellt werden, die die vorhandenen Netzwerkressourcen möglichst optimal für eine gemischte Multimedia-Anwendung ausnutzt, also eine Multimedia-Anwendung, bei der sowohl kontinuierliche als auch unregelmäßige Bitströme auftreten.

### Vorteile der Erfindung

Erfindungsgemäß wird nun vorgeschlagen, eine zwischen Multimedia-Anwendung und Netzwerk geschaltete Anpassungseinheit vorzusehen, die je nach Typ des zu übertragenden Bitstroms entweder einen Übertragungskanal mit kontinuierlicher Bitrate oder einen paketorientierten Übertragungskanal für die Übertragung zur Verfügung stellt. Dazu wird der Anpassungseinheit nicht nur der zu übertragende Bitstrom zugeleitet sondern auch dessen Typ spezifiziert, d. h. ob es sich bei dem zu übertragenden Bitstrom um einen kontinuierlichen oder einen unregelmäßigen Bitstrom handelt.

Dies kann vorteilhafterweise beim Aufbau der Verbindung zwischen Mulitmedia-Anwendung und Anpassungseinheit erfolgen.

Das erfindungsgemäß vorgeschlagene Verfahren ermöglicht eine optimale Ausnutzung der in dem Netzwerk zur Verfügung stehenden Übertragungskanäle mit unterschiedlichen Kanaleigenschaften, was sich zum einen in einer Minimierung der Verbindungskosten niederschlägt und zum anderen auch in einer möglichst verzögerungsarmen Datenübertragung mit guter Qualität.

In diesem Zusammenhang erweist es sich als vorteilhaft, mehrere zu übertragende Bitströme gleichen Typs zu einem Ausgangs-Bitstrom zusammenzufassen und dann diesen Ausgangs-Bitstrom einem entsprechenden Übertragungskanal des Netzwerks zuzuführen. Der zu übertragende Bitstrom bzw. der Ausgangs-Bitstrom kann bei dieser Gelegenheit auch mit einem Fehlerschutz, und gegebenenfalls sogar mit einem individuellen Fehlerschutz versehen werden.

### Beschreibung eines Ausführungsbeispiels

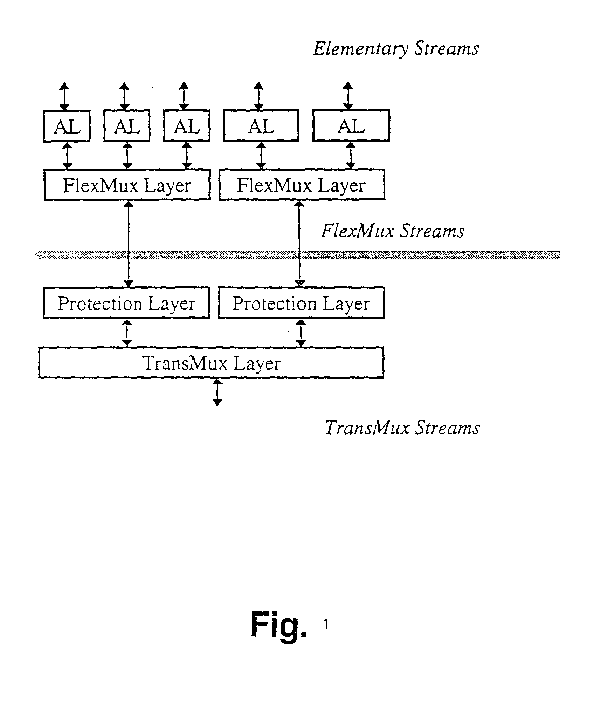

Anhand der einzigen Figur wird das erfindungsgemäße Verfahren zur Übertragung von bei Multimedia-Anwendungen auftretenden Bitströmen nachfolgend am Beispiel eines MPEG-4 Systems erläutert.

Die Netzwerkanpassung erfolgt hier in zwei Schichten, nämlich durch den sogenannten FlexMux Layer und den sogenannten TransMux Layer, die zusammen eine Anpassungseinheit bilden. Diese Anpassungseinheit ist erfindungsgemäß zwischen Multimedia-Anwendung und Netzwerk geschaltet, welche in der einzigen Figur nicht näher dargestellt sind.

Der FlexMux Layer wird von MPEG spezifiziert und faßt die bei der Multimedia-Anwendung auftretenden Bitströme (elementary streams) zu FlexMux-Strömen zusammen, wobei hier lediglich Bitströme gleichen Typs, also entweder kontinuierliche oder unregelmäßige Bitströme, zusammengefaßt werden.

Der TransMux Layer umfaßt sowohl Streammode- als auch Packetmode-Kanäle, welche in der Regel vom Netzwerk zur Verfügung gestellt werden. Die FlexMux-Ströme werden je nach Typ, also je nach dem, ob es sich im Einzelfall um einen kontinuierlichen oder unregelmäßigen Bitstrom handelt, einem entsprechenden Kanal des TransMux, nämlich entweder einem Streammode-Kanal oder einem Packetmode-Kanal, zugeführt.

Wie bereits erwähnt, bilden die beiden Schichten FlexMux Layer und TransMux Layer im hier dargestellten Ausführungsbeispiel eine Anpassungseinheit zwischen Mulitmedia-Anwendung und Netzwerk, die einen gleichzeitigen Zugriff sowohl auf Streammode-Kanäle, wie z. B. für Audio und Video, als auch auf Packetmode-Kanäle, wie z. B. zur Signalisierung und andere Daten, des Netzwerks regelt. Dazu wird erfindungsgemäß jeweils vor der Übertragung eines Bitstroms dessen Typ spezifiziert.

Die Grundvoraussetzungen für eine Netzwerkanpassung mit einer derartigen Anpassungseinheit sind in MPEG-4 Systemen bereits spezifiziert. Die Realisierung der Erfindung erfordert hier lediglich eine Ergänzung des Protokolls, das bei Verbindungsaufbau zwischen Multimedia-Anwendung und Anpassungseinheit abläuft, damit der Unterschied zwischen Stream- und Packetmode in den Kanaleigenschaften (Quality of Service Parameter) berücksichtigt werden kann. Dies könnte wie folgt aussehen: 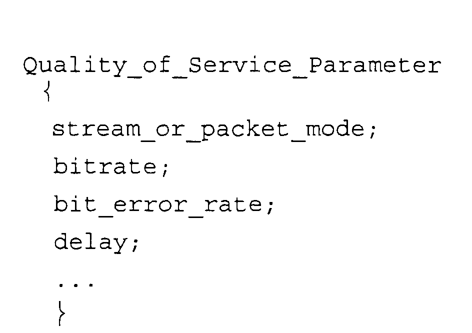 Im hier erläuterten Ausführungsbeispiel wird nicht nur der Typ der einzelnen FlexMux-Ströme spezifiziert, die einzelnen FlexMux-Ströme werden außerdem noch vom TransMux, nämlich in der sogenannten Protection Layer, mit einem individuellen Fehlerschutz versehen.

Abschließend sei nochmals ausdrücklich darauf hingewiesen, daß sich die Erfindung nicht auf das voranstehend beschriebene Ausführungsbeispiel beschränkt. Das MPEG-4 System ist lediglich deshalb als Ausführungsbeispiel ausgewählt worden, weil die Erfindung in diesem Rahmen besonders einfach zu realisieren ist. Die Erfindung läßt sich jedoch auch ganz allgemein in Verbindung mit anderen Systemen realisieren.

## Patentansprüche

1. Verfahren zur Übertragung von bei Multimedia-Anwendungen auftretenden kontinuierlichen und unregelmäßigen Bitströmen über ein Netzwerk mit mindestens einem Übertragungskanal mit konstanter Bitrate und mindestens einem paketorientierten Übertragungskanal,
**dadurch gekennzeichnet,** daß eine zwischen Multimedia-Anwendung und Netzwerk geschaltete Anpassungseinheit vorgesehen ist und daß vor der Übertragung eines Bitstromes jeweils dessen Typ spezifiziert wird, nämlich ob es sich um einen kontinuierlichen oder einen unregelmäßigen Bitstrom handelt, so daß die Anpassungseinheit dementsprechend entweder einen Übertragungskanal mit kontinuierlicher Bitrate oder einen paketorientierten Übertragungskanal für die Übertragung zur Verfügung stellen kann.

2. Verfahren nach Anspruch 1, dadurch gekennzeichnet, daß der Typ des zu übertragenden Bitstromes beim Aufbau der Verbindung zwischen Multimedia-Anwendung und Anpassungseinheit spezifiziert wird.

3. Verfahren nach einem der Ansprüche 1 oder 2, dadurch gekennzeichnet, daß mehrere zu übertragende Bitströme gleichen Typs zu einem Ausgangs-Bitstrom zusammengefaßt werden und daß der Ausgangs-Bitstrom einem entsprechenden Kanal des Netzwerks zugeführt wird.

4. Verfahren nach einem der Ansprüche 1 bis 3, dadurch gekennzeichnet, daß der zu übertragende Bitstrom bzw. der Ausgangs-Bitstrom mit einem Fehlerschutz versehen wird.

5. Verfahren nach Anspruch 4, dadurch gekennzeichnet, daß jeder zu übertragende Bitstrom bzw. die einzelnen Ausgangs-Bitströme mit einem individuellen Fehlerschutz versehen werden.

6. Verfahren nach einem der Ansprüche 1 bis 5, wobei die Anpassungseinheit eine erste Schicht (FlexMux Layer) und eine zweite Schicht (TransMux Layer) mit mindestens einem Kanal mit konstanter Bitrate und mindestens einem paketorientierten Kanal umfaßt,
dadurch gekennzeichnet, daß in der ersten Schicht (FlexMux Layer) Eingangs-Bitströme (elementary streams) gleichen Typs zu Ausgangs-Bitströmen (FlexMux-Ströme) zusammengefaßt werden und die Ausgangs-Bitströme (FlexMux-Ströme) jeweils einem entsprechenden Kanal der zweiten Schicht (TransMux Layer) zugeführt werden.

7. Verfahren nach Anspruch 6, dadurch gekennzeichnet, daß die erste Schicht (FlexMux Layer) von der Multimedia-Anwendung spezifiziert wird.

8. Verfahren nach einem der Ansprüche 6 oder 7, dadurch gekennzeichnet, daß die zweite Schicht (TransMux Layer) vom Netzwerk zur Verfügung gestellt wird.

9. Verfahren nach einem der Ansprüche 6 bis 8, dadurch gekennzeichnet, daß mindestens ein Kanal der zweiten Schicht (TransMux Layer) wahlweise mit konstanter Bitrate oder paketorientiert betrieben wird.

10. Verfahren nach einem der Ansprüche 6 bis 9, dadurch gekennzeichnet, daß die einzelnen Ausgangs-Bitströme (FlexMux-Ströme) mit einem vorzugsweise individuellen Fehlerschutz versehen werden.

11. Verfahren nach Anspruch 10, dadurch gekennzeichnet, daß die einzelnen Ausgangs-Bitströme (FlexMux-Ströme) von der zweiten Schicht (TransMux Layer) mit einem Fehlerschutz versehen werden.
